Europäisches Patentamt

European Patent Office

Office européen des brevets

(19)

(11) Numéro de publication : **0 095 989**
**B1**

(12) **FASCICULE DE BREVET EUROPÉEN**

(45) Date de publication du fascicule du brevet :
17.07.85

(51) Int. Cl.⁴ : **F 02 F 11/00, F 16 J 15/12**

(21) Numéro de dépôt : 83420071.9

(22) Date de dépôt : 26.04.83

(54) Système d'étanchéité aux fluides pour joint de culasse de moteur à combustion interne.

(30) Priorité : 27.05.82 FR 8209698

(43) Date de publication de la demande :
07.12.83 Bulletin 83/49

(45) Mention de la délivrance du brevet :
17.07.85 Bulletin 85/29

(84) Etats contractants désignés :
AT BE CH DE GB IT LI LU NL SE

(56) Documents cités :
FR-A- 1 297 195
FR-A- 2 305 659
FR-A- 2 330 925

(73) Titulaire : **CURTY**
**25, rue Aristide Briand**
**Saint-Priest, Rhône (FR)**

(72) Inventeur : **Ulmer, Georges**
**14, rue des dahlias**
**Lyon 3ème, Rhône (FR)**
Inventeur : **Genin, Bernard Claude Denis**
**6, avenue Marcel Cachin**
**Venissieux, Rhône (FR)**

(74) Mandataire : **Maureau, Philippe**
**Cabinet Germain & Maureau Le Britannia - Tour C 20,**
**bld Eugène Déruelle Boîte Postale 3011**
**F-69392 Lyon Cedex 03 (FR)**

## Description

La présente invention a pour objet un système d'étanchéité aux fluides pour joint de culasse de moteur à combustion interne.

Un joint de culasse est situé entre le bloc moteur et la culasse et doit remplir plusieurs fonctions et notamment :

— assurer l'étanchéité au liquide de refroidissement (eau-glycol) et au liquide de lubrification qui circulent entre le bloc moteur de la culasse ;

— assurer l'étanchéité aux gaz de combustion à des pressions et des températures élevées ;

— réguler l'épaisseur disponible entre la culasse et le bloc moteur en faisant orifice de butée de serrage ;

— compenser les irrégularités géométriques des plans de joint de la culasse et du bloc moteur, de façon à maintenir le contact et conserver l'étanchéité initiale malgré la déformation du moteur survenant au cours du fonctionnement de celui-ci.

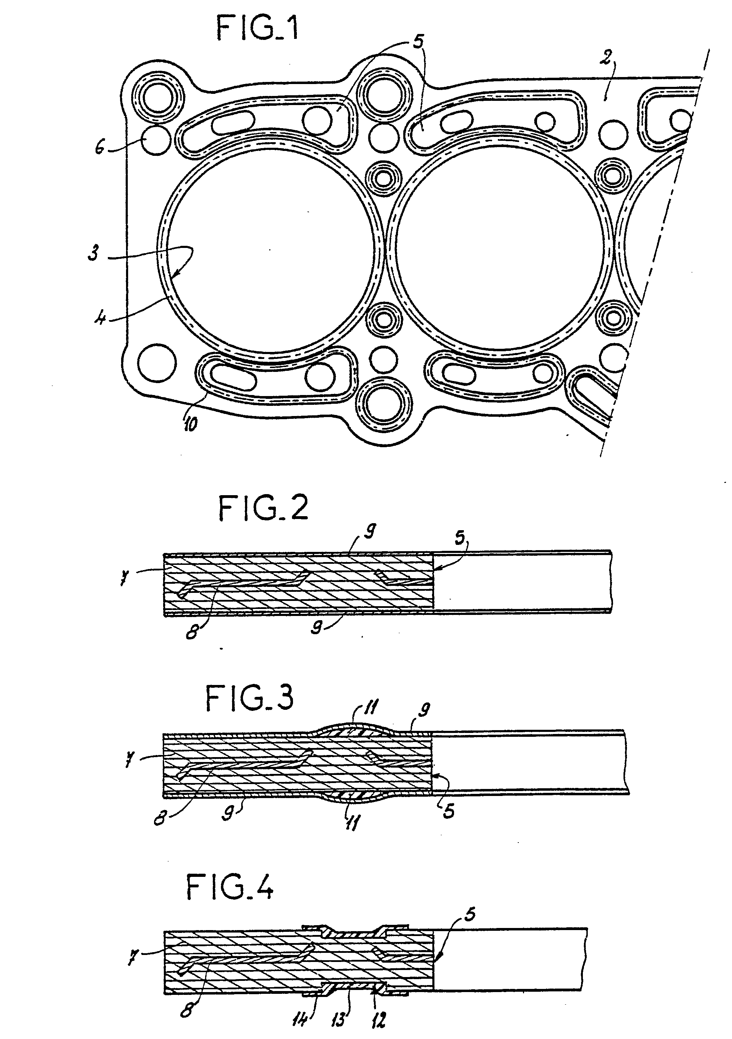

La figure 1 du dessin schématique annexé représente partiellement un joint de culasse, comprenant une plaque centrale (2) dans laquelle sont ménagés d'une part des orifices (3) pour les chambres de combustion, l'étanchéité étant réalisée au niveau de ces dernières par des anneaux de feu (4), et d'autre part des passages (5) pour les liquides à savoir l'huile de lubrification du moteur et le liquide de refroidissement. Il est également prévu des ouvertures (6) destinées au passage des éléments de serrage.

Selon une première possibilité, et comme montré à la figure 2 du dessin, l'étanchéité aux fluides est réalisée par le matériau de base même du joint, constitué par des cartons d'amiante (7) agrafés sur une tôle perforée (8), la plaque étant revêtue sur ses deux faces d'un vernis (9). Si cette solution est satisfaisante lorsque le bloc moteur et la culasse possèdent une excellente planéité, et que le cycle thermique n'impose pas de contraintes trop importantes au joint de culasse, elle ne donne pas satisfaction dans les autres cas.

Une autre solution consiste à prévoir autour des passages de liquide des joints (10) en silicone, par exemple moulés indépendamment de la plaque et fixés sur celle-ci, ou encore moulés à travers des orifices de la plaque.

Une autre possibilité, représentée à la figure 3 du dessin schématique annexé consiste à déposer sur le joint de culasse constitué par des cartons d'amiante (7) agrafés sur une tôle centrale (8), des cordons d'étanchéité (11), par une technique de sérigraphie. Si cette solution est intéressante en ce sens qu'elle assure la formation d'un cordon d'étanchéité en surépaisseur par rapport au plan de chaque face du joint, elle présente l'inconvénient que ces cordons étant de très faible épaisseur résistent mal à la compression, et éclatent sous l'effet de pressions importantes, dues d'une part à la compression du matériau constitutif du joint et d'autre part au cycle thermique.

La présente invention vise à remédier à ces inconvénients.

A cet effet, dans le système qu'elle concerne, le joint de culasse réalisé en un matériau compressible, présente dans chaque zone où l'étanchéité doit être réalisée, deux rainures en vis-à-vis débouchant dans ses deux faces, dont chacune sert au logement d'un cordon d'étanchéité dont l'épaisseur dans la rainure est au plus égale à la profondeur de celle-ci, et qui déborde de la rainure, au moins d'un côté de celle-ci de manière à recouvrir la paroi extérieure du joint de culasse à ce niveau.

Si l'on considère une vue en coupe du joint par un plan perpendiculaire à celui-ci, et passant par un cordon d'étanchéité, chaque partie de cordon située à l'extérieur de la rainure déborde vers l'extérieur, relativement à la partie du cordon recouvrant le fond de la rainure.

Compte-tenu de sa structure, ce cordon d'étanchéité possède une double action.

Au moment du serrage du joint et au début du fonctionnement du moteur, chaque partie du cordon en débord par rapport à la rainure, flue sous l'effet de la pression et assure l'étanchéité. Au cours du fonctionnement du moteur le matériau se tasse, et la partie du cordon située au fond de la rainure devient légèrement saillante par rapport au plan de la face extérieure du matériau, qui s'est entre temps tassé. C'est donc cette zone du cordon qui assure alors l'étanchéité, sachant que les parties du cordon situées en débord de la rainure ont alors subi une compression importante se traduisant généralement par leur éclatement.

Il est ainsi possible d'obtenir une bonne étanchéité de surface au départ, au moment du montage du joint et pendant les premiers instants de fonctionnement, puis lors du fonctionnement ultérieur du moteur, en particulier au moment de la réfrigération du moteur au cours des cycles thermiques chauds-froids alternés. Enfin, un tel agencement procure une excellente étanchéité interne du joint par densification du matériau de base, dans la zone située entre les deux rainures en vis-à-vis.

Avantageusement, la face externe de la partie du cordon d'étanchéité logée dans la rainure, est située légèrement en retrait de la face extérieure du joint, d'une valeur de l'ordre de quelques centièmes de millimètres.

De ce fait, lors du tassement du joint, la zone du cordon située dans la rainure ne subit pas de surpression pouvant conduire à son éclatement.

Selon une autre caractéristique de l'invention, l'épaisseur du cordon d'étanchéité est plus importante au niveau de la rainure, que dans les zones situées en débord de celle-ci.

La largeur de la rainure dans laquelle est déposé le cordon d'étanchéité est comprise entre 1 et 5 millimètres, et sa profondeur est comprise entre 0,05 et 0,3 millimètres.

En ce qui concerne l'épaisseur du joint au niveau de chaque débord, elle est comprise entre 0,03 et 0,1 millimètres.

Un tel cordon d'étanchéité peut être obtenu par différentes techniques, soit par dépôt de la matière constitutive du cordon sur la plaque de base du joint de culasse par sérigraphie, soit par moulage du cordon indépendamment de la plaque, et fixation ultérieure de celui-ci sur la plaque. Les cordons d'étanchéité peuvent être réalisés dans différents matériaux connus et utilisés actuellement à cet effet, tel qu'en silicone.

La figure 4 du dessin schématique annexé représente une forme d'exécution de ce système d'étanchéité.

Dans la forme d'exécution représentée au dessin, le joint de culasse comprend une armature centrale (8) sur laquelle sont fixés des cartons d'amiante (7). Sur la périphérie de chaque ouverture (5) pour le passage de liquides, où doit être réalisée l'étanchéité par l'intermédiaire d'un cordon, sont ménagées deux rainures (12) en vis-à-vis, débouchant chacune dans une face du joint. Dans chaque rainure (12) est déposé un cordon d'étanchéité comportant une partie centrale (13) bouchant la rainure (12), et deux parties (14) en débord de la rainure, venant recouvrir la face externe du joint à ce niveau. Comme montré au dessin, la face extérieure du cordon d'étanchéité dans sa partie centrale (13) recouvrant la rainure (12), est située légèrement en retrait du plan de la plaque dans laquelle est ménagée la rainure, d'une valeur de quelques centièmes de millimètres, par exemple de 0,05 millimètres. En outre, l'épaisseur du cordon au niveau des débords (14) est inférieure à l'épaisseur du cordon dans sa partie centrale (13) venant en recouvrement de la rainure (12).

Il ressort de la structure de ce système d'étanchéité que lors du début du serrage, la compression va tout d'abord être réalisée sur les parties (14) en débord du cordon d'étanchéité, avant d'être réalisée au niveau de la partie centrale (13) de celui-ci après tassement du matériau compressible (7).

Comme il ressort de ce qui précède l'invention apporte une grande amélioration à la technique existante en fournissant un système d'étanchéité aux fluides pour joint de culasse à combustion interne, assurant une excellente étanchéité tant au montage du joint et en début de fonctionnement, qu'après une certaine durée d'utilisation et tassement du joint.

**Revendications**

1. Système d'étanchéité aux fluides pour joint de culasse de moteur à combustion interne, caractérisé en ce que le joint de culasse réalisé en un matériau compressible (7), présente dans chaque zone où l'étanchéité doit être réalisée, deux rainures (12) en vis-à-vis débouchant dans ses deux faces, dont chacune sert au logement d'un cordon d'étanchéité (13, 14) dont l'épaisseur dans la rainure est au plus égale à la profondeur de celle-ci, et qui déborde de la rainure, au moins d'un côté de celle-ci de manière à recouvrir la paroi extérieure du joint de culasse à ce niveau.

2. Système selon la revendication 1, caractérisé en ce que la face externe de la partie du cordon d'étanchéité logée dans la rainure, est située légèrement en retrait de la face extérieure du joint, d'une valeur de l'ordre de quelques centièmes de millimètres.

3. Système selon l'une quelconque des revendications 1 et 2, caractérisé en ce que l'épaisseur du cordon d'étanchéité (13, 14) est plus importante au niveau de la rainure (12), que dans les zones situées en débord de celle-ci.

4. Système selon l'une quelconque des revendications 1 à 3, caractérisé en ce que la largeur de la rainure (12) dans laquelle est déposé le cordon d'étanchéité est comprise entre 1 et 5 millimètres, et sa profondeur est comprise entre 0,05 et 0,3 millimètres.

5. Système selon l'une quelconque des revendications 1 à 4, caractérisé en ce que l'épaisseur du joint au niveau de chaque débord est comprise entre 0,03 et 0,1 millimètre.

**Claims**

1. A fluid-tightness system for a head gasket of an internal combustion engine, characterised in that the head gasket made of compressible material (7) has, in each zone in which leak-tightness is to be achieved, two grooves (12) opposite one another and opening into its two faces, each of which is designed to house a sealing strip (13, 14) whose thickness in the groove is at most equal to the depth of the groove, and which projects from the groove, at least on one side thereof, so as to cover the external wall of the head gasket at this location.

2. A system as claimed in Claim 1, characterised in that the external face of the portion of the sealing strip housed in the groove is disposed slightly inwardly of the external face of the gasket by a value of a few hundredths of a millimeter.

3. A system as claimed in any one of Claims 1 and 2, characterised in that the sealing strip (13, 14) has a greater thickness in the area of the groove (12) than in the areas disposed to project therefrom.

4. A system as claimed in any one of Claims 1 to 3, characterised in that the width of the groove (12) in which the sealing strip is disposed is between 1 and 5 millimeters, and its depth is between 0.05 and 0.3 millimeters.

5. A system as claimed in any one of Claims 1 to 4, characterised in that the thickness of the gasket in the area of each projection is between 0.03 and 0.1 millimeters.

**Patentansprüche**

1. Fluidabdichtungssystem für Zylinderkopfdichtung einer Brennkraftmaschine, dadurch gekennzeichnet, daß die aus einem kompressiblen Material (7) hergestellte Zylinderkopfdichtung in jeder Zone, in der die Abdichtung verwirklicht werden muß, zwei einander gegenüberliegende Nuten (12) aufweist, die in ihren beiden Flächen münden und von denen jede der Aufnahme eine Abdichtschnur (13, 14) dient, deren Dicke in der Nut höchstens gleich deren Tiefe ist und die über die Nut auf mindestens einer ihrer Seiten vorsteht derart, daß die Außenwand der Zylinderkopfdichtung in diesem Bereich überdeckt wird.

2. System nach Anspruch 1, dadurch gekennzeichnet, daß die Außenfläche des in der Nut liegenden Bereiches der Abdichtschnur leicht rückspringend zur Außenfläche der Dichtung liegt, mit einem Wert in der Größenordnung einigen Hundertstel Millimetern.

3. System nach einem der Ansprüche 1 und 2, dadurch gekennzeichnet, daß die Dicke der Abdichtschnur (13, 14) im Bereich der Nut (12) größer ist als in den über die Nut vorstehenden Zonen.

4. System nach einem der Ansprüche 1 bis 3, dadurch gekennzeichnet, daß die Breite der Nut (12), in der die Abdichtschnur niedergelegt ist, zwischen 1 und 5 mm beträgt und ihre Tiefe zwischen 0,05 und 0,3 mm beträgt.

5. System nach einem der Ansprüche 1 bis 4, dadurch gekennzeichnet, daß die Dicke der Dichtung in einem jeden vorstehenden Bereich zwischen 0,03 und 0,1 mm beträgt.

## FIG_1

## FIG_2

## FIG_3

## FIG_4